# EUROPÄISCHE PATENTSCHRIFT

(11) **EP 0 636 074 B1**
(45) Veröffentlichungstag und Bekanntmachung des Hinweises auf die Patenterteilung: **28.08.1996**
(21) Anmeldenummer: 93907778.0
(22) Anmeldetag: 02.04.1993
(51) Int. Cl.: B60R 21/32

(54) **VERFAHREN UND EINRICHTUNG ZUM SCHUTZ VON FAHRZEUGINSASSEN**
PROCEDURE AND DEVICE FOR PROTECTING VEHICLE OCCUPANTS
PROCEDE ET DISPOSITIF DE PROTECTION DES OCCUPANTS D'UN VEHICULE AUTOMOBILE

(30) Priorität: 14.04.1992 DE 4212421
(43) Veröffentlichungstag der Anmeldung: 01.02.1995
(73) Patentinhaber: ROBERT BOSCH GMBH, 70442 Stuttgart (DE)
(72) Erfinder: NITSCHKE, Werner, D-7257 Ditzingen 1 (DE); WETTSTEIN, Horst, D-7500 Karlsruhe 1 (DE)
(86) Internationale Anmeldenummer: DE9300313
(87) Internationale Veröffentlichungsnummer: WO9321043

(56) Entgegenhaltungen:
- WO-A-90/09298
- WO-A-90/11207
- DE-A- 3 803 426
- DE-A- 3 809 074
- DE-A- 4 023 109
- DE-A- 4 208 714
- INGENIEURS DE L'AUTOMOBILE Nr. 6, 1982, PARIS, FRANCE Seiten 69 - 77 W. SUCHOWERSKYJ 'Evolution en matière de détecteurs de choc'
- PATENT ABSTRACTS OF JAPAN vol. 16, no. 428 (M-1307)8. September 1992 & JP-A-04 146 848 ( KANSEI CORP. ) 20 May 1992

## Beschreibung

Die Erfindung betrifft ein Verfahren zum Schutz von Fahrzeuginsassen nach dem ersten Teil des Anspruchs 1, beziehungsweise eine Einrichtung zum Schutz von Fahrzeuginsassen nach dem ersten Teil des Anspruchs 14.

### Stand der Technik

Ein die Fahrzeuginsassen gefährdender Verkehrsunfall, wie zum Beispiel ein Aufprall des Fahrzeugs auf ein festes Hindernis oder ein Zusammenstoß mit einem anderen Fahrzeug, ist ein außerordentlich schnell ablaufender Vorgang, der von dem ersten Kontakt mit dem Hindernis bis zur Beendigung nur etwa 100 Millisekunden dauert. Schutzmittel zum Schutz der Fahrzeuginsassen gegen Unfallschaden, wie beispielsweise Gurtstraffer und/oder Airbag benötigen andererseits eine gewisse Minimalzeit für ihre Aktivierung. Unter Aktivierung soll beispielsweise im Zusammenhang mit einem Airbag der Vorgang verstanden werden, der von der Zündung der Gastreibladung bis zum Aufblasen des Airbags in seine Schutzlage verstreicht. Hierfür werden einige 10 Millisekunden benötigt. Bei den vorstehend beschriebenen Schutzsystemen besteht daher insbesondere das Problem, das Gefährdungspotential eines Unfallvorgangs möglichst frühzeitig zu erfassen, um das in dem Fahrzeug vorgesehene Schutzsystem so rechtzeitig aktivieren zu können, daß es unter Berücksichtigung seiner Aktivierungszeit noch zum Schutz des Fahrzeuginsassen beitragen kann. Beispielsweise muß ein Airbag so rechtzeitig aufgeblasen werden, daß der durch die bei dem Unfall auftretenden Kraftwirkungen stark beschleunigte Fahrzeuginsasse nicht mit dem Kopf auf Fahrzeugteile, zum Beispiel das Lenkrad, aufschlägt und sich dabei ernsthaft verletzt. Andererseits darf der Auslösemechanismus für das Schutzsystem nicht so empfindlich sein, daß er bereits bei für Fahrzeuginsassen unschädlichen Beschleunigungswerten anspricht und das Schutzsystem aktiviert. Dies hätte nämlich hohe Kosten für die Reparatur des unnötigerweise aktivierten Schutzsystems zur Folge.

Es hat schon zahlreiche Versuche zur Lösung dieses schwierigen Problems gegeben. So ist aus US-A-40 20 453 eine Sicherheitsvorrichtung mit einem die Beschleunigung des Fahrzeugs erfassenden Beschleunigungssensor bekannt, bei der das Beschleunigungssignal auf integriert und Schutzsystem dann ausgelöst wird, wenn der aufintegrierte Beschleunigungswert einen vorgebbaren Schwellwert überschreitet. Bei dieser bekannten Sicherheitseinrichtung wird also ein durch einen Schwellwert vorgebbarer integrierter Beschleunigungswert als so gefährlich angesehen, daß daraufhin die Aktivierung des Schutzsystem notwendig ist. Unberücksichtigt bleibt bei dieser bekannten Sicherheitseinrichtung die tatsächliche Sitzposition des zu schützenden Fahrzeuginsassen, die ja von Fall zu Fall sehr unterschiedlich sein kann. Beispielsweise kann ja der Fahrzeuginsasse seinen Rücken fest an die Rücklehne des Fahrzeugsitzes gepreßt haben oder aber sein Kopf befindet sich in der Nähe des Armaturenbretts, um beispielsweise in der Dämmerung eine Anzeige besser ablesen zu können. Von der tatsächlichen Sitzposition des Fahrzeuginsassen ist aber die optimale Schutzwirkung des Schutzsystems abhängig.

Es sind daher auch schon Versuche gemacht worden, die tatsächliche Position des Fahrzeuginsassen zu erfassen und bei der Aktivierung des Schutzsystems zu berücksichtigen. Derartige Schutzsysteme sind beispielsweise aus DE-A-40 05 598, DE-A-38 09 074 oder aus DE-A-40 23 109 bekannt. Die letztgenannten Lösungen sind aber vergleichsweise aufwendig, da sie zusätzliche Sensoren, wie beispielsweise Sitzkontakte, Ultraschallschranken, Lichtschranken oder dergleichen notwendig machen, um die tatsächliche Position des Fahrzeuginsassen zu erfassen. Die Anpassung derartiger zusätzlicher Sensoren und Auswertemittel dafür an unterschiedliche Fahrzeuge und ggf. auch an die unterschiedliche Gestalt von Fahrzeuginsassen ist mit einem großen Konstruktions- und Wartungsaufwand verbunden. Schließlich können diese zusätzlichen Komponenten auch die Sicherheit des Schutzsystems insgesamt beeinträchtigen, da in den für die Verbindung der Sensoren und Auswerteeinheiten notwendigen Leitungen und Kontaktmitteln Fehler auftreten können.

Aus der DE-A-38 03 426 (Dokument D1), die wohl den nächstliegenden Stand der Technik repräsentiert, ist schließlich ein Verfahren zum Schutz von Fahrzeuginsassen bekannt, bei dem ein für die Fahrzeuginsassen vorgesehenes Schutzmittel, wie zum Beispiel Airbag und/oder Gurtstraffer in Abhängigkeit von dem Ausgangssignal mindestens eines die Fahrzeugbeschleunigung erfassenden Beschleunigungssensors aktiviert wird, wobei nach dem Beginn eines Unfallablaufs die von der Beschleunigungseinwirkung hervorgerufene zukünftige Verlagerung des Fahrzeuginsassen und/oder seine zukünftige Relativgeschwindigkeit in bezug auf die Fahrgastzelle während eines definierten Zeitraums prognostiziert wird, und bei dem eine Aktivierung des Schutzmittels dann erfolgt, wenn die Prognose ergibt, daß die prognostizierten Werte vorgebbare Grenzwerte überschreiten.

Ausgehend von diesem bekannten Stand der Technik liegt der Erfindung die Aufgabe zugrunde, die Auslösung eines Schutzsystems für Fahrzeuginsassen weiter zu verbessern.

Diese Aufgabe ist durch die Merkmale der unabhängigen Ansprüche 1 und 14 gelöst. Weitere Ausgestaltungen der Erfindung sind in den Unteransprüchen enthalten.

### Vorteile der Erfindung

Die Erfindung bietet insbesondere den Vorteil, daß eine rechtzeitige Aktivierung des für den Fahrzeuginsassen vorgesehenen Schutzmittels unter Berücksichtigung einer beschleunigungsbedingten Verlagerung des Fahrzeuginsassen oder der beschleunigungsbedingten Relativgeschwindigkeit des Fahrzeuginsassen in bezug auf die Fahrgastzelle auch ohne zusätzliche, die Position des Fahrzeuginsassen erfassende Sensoren ermöglicht wird. Eine rechtzeitige Aktivierung des Schutzmittels wird insbesondere durch eine Abschätzung der innerhalb der Aktivierungszeit zu erwartenden Verlagerung des Fahrzeuginsassen erzielt. Diese Abschätzung ermöglicht eine besonders schnelle Reaktion des Schutzmittels und stellt sicher, daß dieses im Gefahrenfall rechtzeitig aktiviert ist, um seine Schutzfunktion zu erfüllen. Besonders zweckmäßig wird diese Abschätzung vermittels einer geglätteten Beschleunigungskurve vorgenommen, die mittels einer Filteroperation aus dem aktuellen Beschleunigungsmeßsignal gewonnen wird, wobei eine Kalman-Filterung angewandt wird. Der Verlauf der geglätteten Beschleunigungskurve läßt sich durch einen bekannten Funktionsverlauf, der gut beherrschbar ist, annähern, so daß mit vergleichsweise geringem Aufwand auch auf zeitlich in der Zukunft liegende Beschleunigungswerte geschlossen werden kann.

Weitere Vorteile der Erfindung ergeben sich aus den weiteren Unteransprüchen.

### Zeichnungen

Ausführungsbeispiele der Erfindung sind in den Zeichnungen dargestellt und in der nachfolgenden Beschreibung näher erläutert. Es zeigen:
Figur 1 die Darstellung eines Schutzsystems für Fahrzeuginsassen in Gestalt eines Blockschaltbildes,
Figur 2 Signalformen als Funktion der Zeit bei einem nicht einer Beschleunigung ausgesetzten Fahrzeug,
Figur 3 Signalformen als Funktion der Zeit bei einem einer Beschleunigung ausgesetzten Fahrzeug,
Figur 4 den Verlauf des Beschleunigungssignals als Funktion der Zeit für unterschiedliche Karosserietypen und bei unterschiedlichen Fahrzeuggeschwindigkeiten,
Figur 5 ein Diagramm zur Erläuterung des Karosserietyps,
Figur 6 eine Darstellung der von dem jeweiligen Karosserietyp abhängigen Crashdauer,
Figur 7 ein die Beschleunigung als Funktion der Zeit bei einer bestimmten Geschwindigkeit darstellende Kurven,
Figur 8 ein die beschleunigungsabhängige Verlagerung des Fahrzeuginsassen erläuterndes Schaubild,
Figur 9 eine Darstellung des Geschwindigkeitsgrenzwertes in Abhängigkeit von der Beschleunigung,
Figur 10 den Verlauf einer von zeitabhängigen Grenzwerten gebildeten Kurve,
Figur 11 das Ausgangssignal eines einen Unfall registrierenden Beschleunigungssensors und eine durch Filterung geglättete Beschleunigungskurve und
Figur 12 das Ausgangssignal eines einen Unfall registrierenden Beschleunigungssensors mit einer durch Filterung geglätteten Beschleunigungskurve und einer von zeitabhängigen Grenzwerten gebildeten Kurve.

### Beschreibung der Ausführungsbeispiele

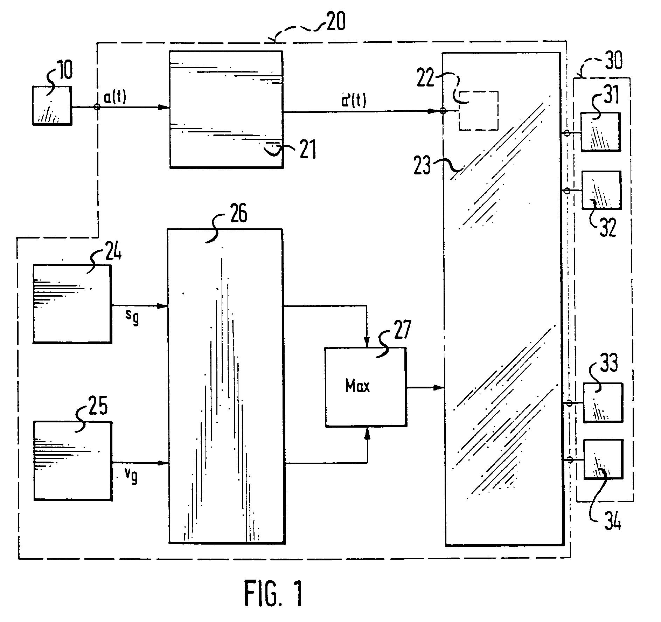

Figur 1 zeigt in Gestalt eines Blockschaltbildes ein Schutzsystem für Fahrzeuginsassen. Dieses Schutzsystem umfaßt mindestens einen, Fahrzeugbeschleunigungen erfassenden Sensor 10, der an sich bekannt ist und der beispielsweise aus einer piezoelektrischen Keramik oder aus Dehnungsmeßstreifen bestehen kann, die jeweils von einer seismischen Masse beaufschlagt werden. Bei einer Krafteinwirkung auf die seismische Masse infolge einer Beschleunigung gibt der Sensor 10 beispielsweise eine der Beschleunigung proportionale Ausgangsspannung ab, die in dem Blockschaltbild mit a(t) bezeichnet ist. Der Sensor 10 ist mit einer elektronischen Einrichtung 20 verbunden, die das ihr eingangsseitig zugeführte Ausgangssignal a(t) des Sensors 10 verarbeitet und die ausgangsseitig die für die Fahrzeuginsassen vorgesehenen Sicherungsmittel 30 ansteuert. Die elektronische Einrichtung 20 umfaßt Filtermittel 21 für die Filterung des Ausgangssignals des Sensors 10. Durch die Filterung wird das Ausgangssignal a(t) des Sensors 10 in das Signal a'(t) umgewandelt. Dieses Signal a'(t) wird einer in der elektronischen Einrichtung 20 vorgesehenen Vergleichseinrichtung 22 zugeleitet, die vorzugsweise Bestandteil eines Mikrorechners 23 ist. Die elektronische Einrichtung 20 umfaßt weiter eine Einrichtung 24 zur Vorgabe eines Grenzwertes s_{g} für die Verlagerung, insbesondere Vorverlagerung des Fahrzeuginsassen sowie eine weitere Einrichtung 25 für die Vorgabe eines Geschwindigkeitsgrenzwertes v_{g} bezüglich der Relativgeschwindigkeit des Fahrzeuginsassen in bezug auf die Fahrgastzelle. Die beiden Einrichtungen 24 und 25 sind mit einer weiteren Einrichtung 26 verbunden, die die Verlagerung und die Geschwindigkeit des Fahrzeuginsassen für einen zeitlich später liegenden Zeitpunkt berechnen kann. Die Einrichtung 26 ist mit einer weiteren Einrichtung 27 verbunden, deren Ausgangsanschluß wiederum mit dem Mikrorechner 23 verbunden ist. Die Einrichtung 27 stellt fest, ob und ggf. welche der beiden Größen Vorverlagerung s und Geschwindigkeit v die vorgebbaren Grenzwerte s_{g} und v_{g} überschritten hat. Der jeweils zutreffende Wert wird dem Mikrorechner 23 zugeleitet. Der Mikrorechner 23 ist ausgangsseitig mit Schutzmitteln 30 für Fahrzeuginsassen verbunden. Diese Schutzmittel umfassen vorzugsweise einen ersten Airbag 31 für den Fahrer des Fahrzeugs, einen zweiten Airbag 32 für den Beifahrer des Fahrzeugs, sowie ggf. Gurtstraffer 33 und 34 für mindestens den Fahrer und Beifahrer.

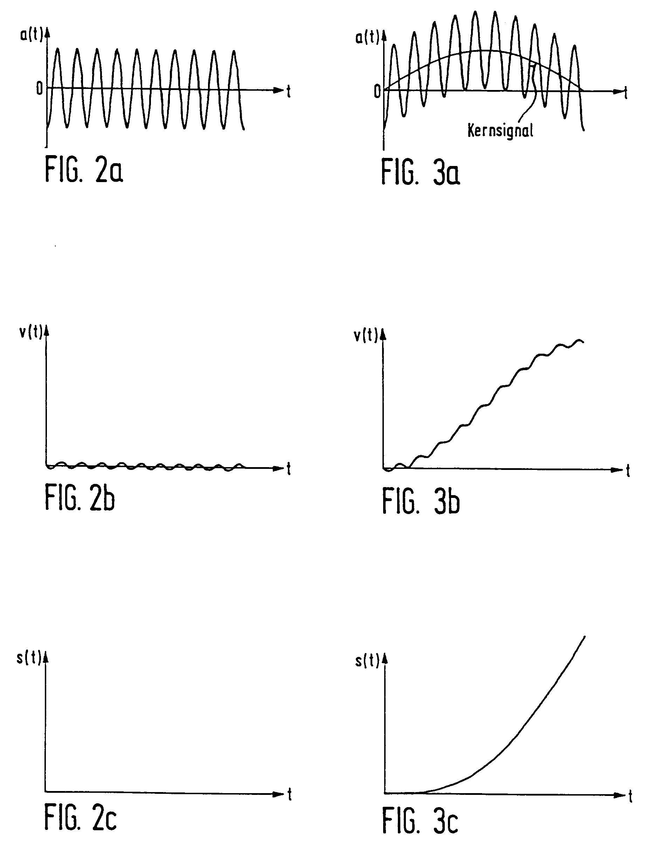

Um das Verständnis der Erfindung zu erleichtern, werden im folgenden unter Bezug auf Figur 2 und Figur 3 zunächst diverse Signalformen als Funktion der Zeit erläutert. So zeigt Figur 2a das auch als Beschleunigungssignal bezeichnete Ausgangssignal a(t) des Sensors 10. In der Praxis zeigt sich, daß auch bei einem sich mit gleichförmiger Geschwindigkeit fortbewegenden Fahrzeug, das also im wesentlichen keiner Beschleunigungseinwirkung in Fortbewegungsrichtung oder in dazu entgegengesetzter Richtung unterworfen ist, ein Ausgangssignal a(t) des Sensors 10 meßbar ist, das bipolare Komponenten aufweist, die im wesentlichen symmetrisch zu der Nullinie, also der t-Achse liegen. Man kann hier auch von einer Modulation des Beschleunigungssignals sprechen. Diese Modulation wird durch infolge der Fahrbewegungen des Fahrzeugs hervorgerufene Beschleunigungen des Fahrzeugaufbaus erzeugt, die von dem Sensor 10 als Beschleunigung gemessen werden. In Figur 2b ist die Relativgeschwindigkeit v(t) des Fahrzeuginsassen in bezug auf die Fahrgastzelle als Funktion der Zeit t dargestellt. Dieses Signal läßt sich durch eine Integration aus dem Ausgangssignal a(t) des Sensors a gewinnen. Auch Figur 2b zeigt einen Signalverlauf, der im wesentlichen bipolare Komponenten von vergleichsweise kleiner Amplitude aufweist, die im wesentlichen nicht zu einer Vorverlagerung des Fahrzeuginsassen führen. Diese Vorverlagerung ist in dem Diagramm nach Figur 2c als Kurve s(t) dargestellt, die sich durch Integration aus der Relativgeschwindigkeit ermitteln läßt.

Figur 3 zeigt die entsprechenden Signalverläufe, wenn das Fahrzeug einer Beschleunigung in Längsachsenrichtung unterworfen ist, die beispielsweise bei einem Unfall auftritt. So zeigt Figur 3a wiederum eine Darstellung des Ausgangssignals a(t) des Sensors 10 als Funktion der Zeit t. Zu erkennen ist eine modulierte Signalform, die jetzt jedoch in wesentlichen Teilbereichen nur noch unipolar ist, also keine über die Nullinie hinausreichenden Komponenten mehr aufweist. Figur 3b zeigt das Geschwindigkeitssignal v(t), das bis auf eine Modulation infolge geringfügiger Amplitudenschwankungen im wesentlichen linear ansteigend verläuft. Und schließlich zeigt Figur 3c den die Vorverlagerung des Fahrzeuginsassen repräsentierenden Kurvenverlauf s(t), der eine quadratische Funktion der Zeit t darstellt. Nach Glättung bzw. Filterung läßt sich aus dem in Figur 3a dargestellten modulierten Ausgangssignal a(t) des Sensors 10a eine Kurve gewinnen, die in der gemäß Figur 3a gewählten Darstellungsform im wesentlichen oberhalb der Nullinie verläuft und die als "Kernsignal" bezeichnet werden kann.

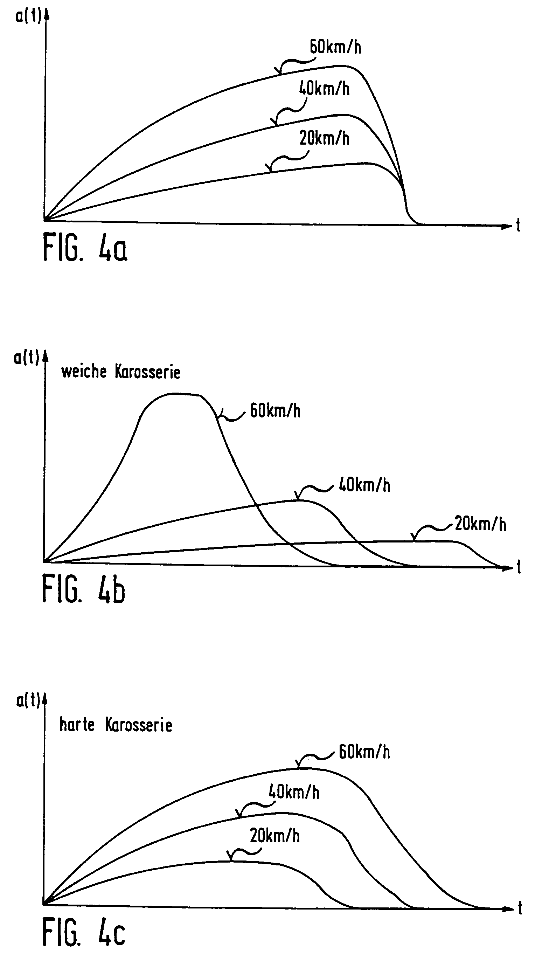

Für das Verständnis der Erfindung ist weiterhin wichtig der Verlauf dieses sogenannten Kernsignals bei unterschiedlichen Karosserietypen. Diese Karosserietypen werden im folgenden kurz anhand von Figur 4 erläutert. Figur 4a zeigt den Verlauf des Ausgangssignals a(t) des Sensors 10 als Funktion der Zeit t bei einer idealisierten Standardkarosserie mit unterschiedlichen Geschwindigkeitswerten von 20 km/h, 40 km/h und 60 km/h als Parameter. Figur 4a zeigt, daß sich mit steigender Geschwindigkeit auch die Amplitude des Maximums des Signals a(t) vergrößert, daß jedoch die Zeitdauer der im Koordinatenursprung beginnenden Beschleunigungseinwirkung unabhängig von der Höhe der Geschwindigkeit im wesentlichen gleich ist. Davon abweichend zeigen die jeweils eine sogenannte weiche Karosserie bzw. eine sogenannte harte Karosserie repräsentierenden Signalformen in Figur 4b und Figur 4c völlig andere Signalverlaufe. So zeigt Figur 4b zwar auch mit wachsender Geschwindigkeit zunehmende Amplitudenwerte für die Maxima des Kurvenverlaufs a(t), also des Beschleunigungssignals. Diese Maxima treten jedoch nicht mehr zum gleichen Zeitpunkt auf und die Zeitdauer der Beschleunigungseinwirkung ist unterschiedlich lang. Die größte Amplitude mit der kürzesten Zeitdauer des Beschleunigungsvorgangs tritt bei der höchsten Geschwindigkeit von 60 km/h auf.

Bei der durch die Signalverläufe von Figur 4c repräsentierten sogenannten harten Karosserie sind auch proportional zur Geschwindigkeit größere Amplituden des Beschleunigungssignals a(t) feststellbar, die, ebenfalls wie bei der weichen Karosserie gemäß 4b, zu unterschiedlichen Zeiten auftreten. Im Gegensatz zu der in Figur 4b erkennbaren Darstellung nimmt jedoch die Zeitdauer mit wachsender Geschwindigkeit zu.

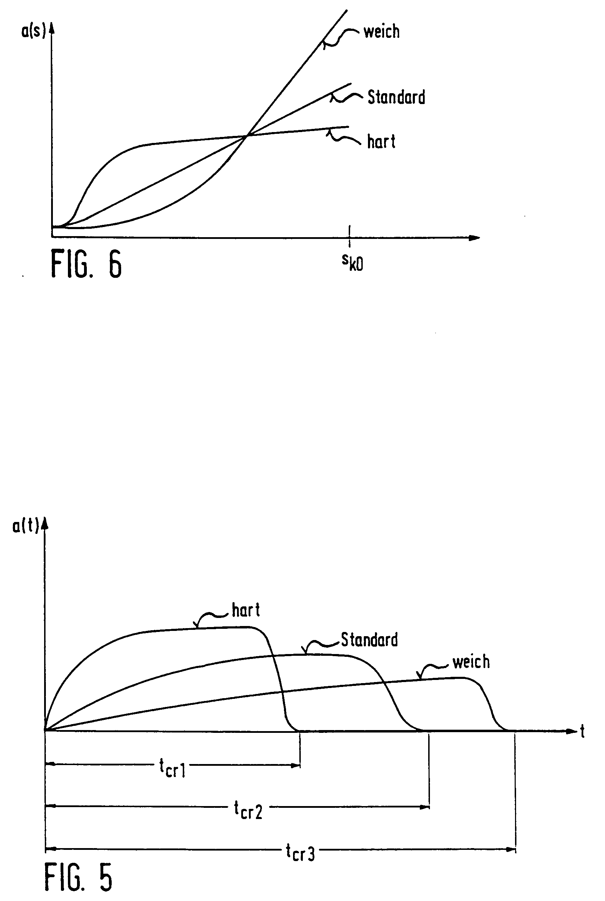

Die Art des jeweiligen Karosserietyps ließe sich bei Kenntnis des konstruktiven Aufbaus näherungsweise mittels komplexer Rechenprogramme ermitteln; in der Praxis wird jedoch der Karosserietyp üblicherweise empirisch ermittelt, indem mit einem Versuchsmuster des Fahrzeugs Crashversuche bei niedrigen Geschwindigkeiten wie zum Beispiel bei 20 km/h durchgeführt werden. Als Ergebnis derartiger empirischer Crashversuche mit jeweils einem harten, weichen bzw. Standard-Karosserietyp erhält man die in Figur 5 dargestellten Beschleunigungskurven a(t). Diese zeigen wiederum, daß bei unterschiedlichen Karosserietypen unterschiedlich hohe Amplitudenwerte bei einer Beschleunigungseinwirkung auftreten und daß überdies die Crashdauer unterschiedlich lang ist. So ist beispielsweise bei dem harten Karosserietyp, bei dem die größte Beschleunigungsamplitude auftritt, die Crashdauer schon nach der Zeit t_{cr1} beendet, während bei dem weichen Karosserietyp, der sich durch eine vergleichsweise niedrige Maximalamplitude im Verlauf der Beschleunigungskurve a(t) auszeichnet, die Crashdauer erst nach der vergleichsweise langen Zeit t_{cr3} beendet ist.

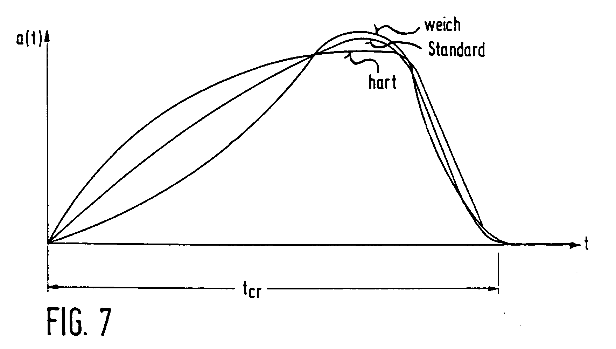

Aus diesen Ergebnissen läßt sich der überraschende Zusammenhang ableiten, daß, wie in Figur 6 und Figur 7 dargestellt ist, unabhängig von der Art des Karosserietyps es eine bestimmte Geschwindigkeit v₀ gibt, bei der die Crashdauer t_{cr} unabhängig von dem Karosserietyp ist. Die Crashdauer ist nur von der Länge der Knautschzone sₖ₀ des Fahrzeugs abhängig.

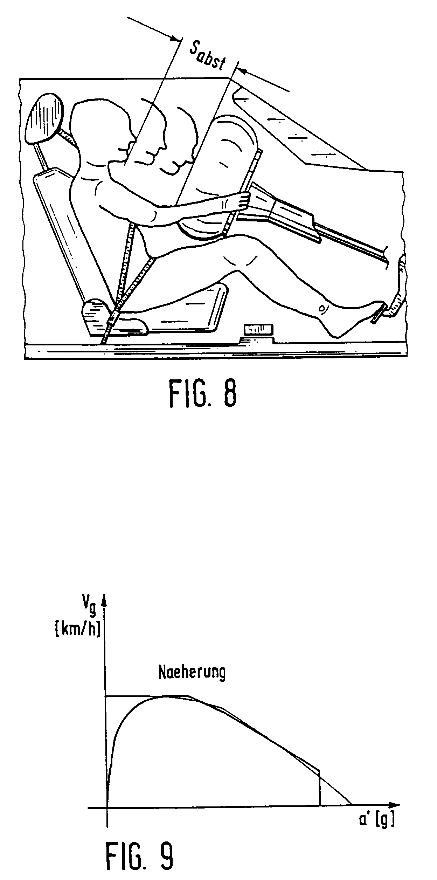

Das Schaubild in Figur 8 erläutert die beschleunigungsabhängige Verlagerung des Fahrzeuginsassen, insbesondere seine Vorverlagerung bei einer negativ gerichteten Beschleunigungseinwirkung, die vorzugsweise bei einem Unfall zu beobachten ist. Mit S_{abst} ist die maximale Wegstrecke bezeichnet, die beispielsweise der Kopf des in Normalposition sitzenden Fahrzeuginsassen bis zum Aufprall auf das Lenkrad, bzw. das aktivierte Sicherungsmittel, zurücklegen kann.

Hieraus ergibt sich, daß bei einer vergleichsweise geringen Relativgeschwindigkeit des Fahrzeuginsassen in bezug auf die Fahrgastzelle ein größerer Zeitraum zum Durchmessen der Strecke S_{abst} zur Verfügung steht als bei einer vergleichsweise höheren Relativgeschwindigkeit. Diese Zusammenhänge sind im Hinblick auf die endliche, in der Regel von der Unfallart und von dem Karosserietyp unabhängige Aktivierungszeit des Sicherungsmittels von Bedeutung. Das Sicherungsmittel ist nämlich so frühzeitig zu aktivieren, daß es seine Schutzwirkung entfalten kann, bevor der Fahrzeuginsasse die maximal zur Verfügung stehende unkritische Vorverlagerungsstrecke s_{abst} zurückgelegt hat. Weiterhin zeigt Figur 9 noch eine Darstellung des Geschwindigkeitsgrenzwertes v_{g} in Abhängigkeit von der mittleren (gefilterten) Beschleunigung a'. Aus dieser Darstellung ergibt sich, daß der Geschwindigkeitsgrenzwert v_{g}, der eine Funktion des in Figur 8 angegebenen maximalen Vorverlagerungsweges s_{abst} und der Aktivierungszeit des Schutzmittels ist, mit wachsender Beschleunigung a' verringert werden muß, um noch eine sichere Aktivierung des Schutzrechtsmittels zu ermöglichen.

Die vorstehend dargelegten Erkenntnisse haben zu dem Ergebnis geführt, daß bei jedem beliebigen Karosserietyp ein optimaler Schutz der Fahrzeuginsassen durch rechtzeitige Aktivierung der vorhandenen Schutzmittel dann gewährleistet werden kann, wenn die von der Beschleunigungseinwirkung hervorgerufene zukünftige Vorverlagerung des Fahrzeuginsassen und/oder seine zukünftige Relativgeschwindigkeit in bezug auf die Fahrgastzelle abgeschätzt werden und wenn eine Aktivierung des Schutzmittels dann erfolgt, wenn die Abschätzung ergibt, daß die Schätzwerte innerhalb eines vorgebbaren zukünftigen Zeitintervalls vorgebbare Grenzwerte überschreiten. Als vorgebbares zukünftiges Zeitintervall wird dabei die jeweils bekannte Aktivierungzeit des jeweiligen Schutzmittels angegeben. Im Falle eines als Schutzmittel vorgesehenen Airbags beträgt dieses vorgebbare Zeitintervall daher zwischen 10 und 50 Millisekunden, vorzugsweise zwischen 20 und 40 Millisekunden. Wenn die in diesem Zeitintervall zu erwartende Vorverlagerung des Insassen bzw. seine Relativgeschwindigkeit in bezug auf die Fahrgastzelle vorausgeschätzt werden, kann beurteilt werden, ob eine Aktivierung der Schutzmittel überhaupt notwendig ist und ob die zur Verfügung stehende Zeitdauer für die Entfaltung der Schutzmittel überhaupt ausreicht.

Zweckmäßig werden bei der Vorgabe der Grenzwerte für die Verlagerung des Fahrzeuginsassen und/oder seine Relativgeschwindigkeit in bezug auf die Fahrgastzelle auch die Geometrie und/oder die Struktur der Fahrgastzelle und/oder des Schutzmittels berücksichtigt, da diese von der jeweiligen konstruktiven Ausgestaltung abhängig sein können. Zweckmäßig wird die zulässige Vorverlagerungsstrecke s_{abst} zwischen etwa 5 und 30 cm, vorzugsweise zwischen 10 und 20 cm festgelegt, während die Relativgeschwindigkeit des Fahrzeuginsassen zwischen 5 bis 30 km/h, vorzugsweise zwischen 10 und 20 km/h festgelegt wird.

In einem ersten Ausführungsbeispiel der Erfindung werden, wie zuvor erläutert, als vorgebbare Grenzwerte feste Werte eingesetzt, die beispielsweise konstruktionsabhängig sein können.

In einem besonders vorteilhaften Ausführungsbeispiel der Erfindung werden jedoch als vorgebbare Grenzwerte veränderliche Werte gewählt, die zweckmäßig von mindestens einem Betriebsparameter des Fahrzeugs abhängig sind. Eine besonders günstige und frühzeitige Aktivierungsmöglichkeit für die Schutzmittel ergibt sich, wenn die vorgebbaren Grenzwerte zeitlich veränderbar sind und von der Grashdauer abhängig gewählt werden. Dabei werden zu Beginn eines Crashvorgangs noch relativ große Grenzwerte vorgesehen, die jedoch dann, mit zunehmender Dauer des Crashs verringert, das heißt also, verschärft werden. Die Verringerung erfolgt dabei zweckmäßig in zeitlicher Abhängigkeit von einem als ganz besonders günstig erkannten Funktionsverlauf.

Für die Abschätzung der innerhalb des zu berücksichtigen Zeitraums zu erwartenden Verlagerung des Fahrzeuginsassen oder seiner zu erwartenden Relativgeschwindigkeit in bezug auf die Fahrgastzelle des Fahrzeugs wird zweckmäßig das Beschleunigungssignal des mindestens einen Beschleunigungssensors 10 ausgewertet, wobei allerdings auf eine von den höher frequenten Modulationsspitzen befreite, das heißt, gefilterte Beschleunigungskurve zurückgegriffen wird, die zweckmäßig mittels eine Filtervorgangs aus dem Ausgangssignal a(t) des Sensors 10 abgeleitet wird. Dazu wird, wie schon unter Bezug auf Figur 1 beschrieben, das letztgenannte Ausgangssignal einer Filtereinrichtung 21 zugeleitet, die das Ausgangssignal a'(t) durch Kalman-Filterung des Ausgangssignals a(t) des Sensors 19 erzeugt, da mittels dieser Filterung besonders zuverlässige Vorausschätzungen ermöglicht werden. In einem ersten Ausführungsbeispiel der Erfindung, bei dem nur ein vergleichsweise geringer Rechenaufwand im Zusammenhang mit der Verarbeitung des Ausgangssignals des Sensors 10 erforderlich ist, wird entweder nur eine Vorausschätzung hinsichtlich der Vorverlagerung des Fahrzeuginsassen oder, als Alternative, hinsichtlich der zu erwartenden Relativgeschwindigkeit vorgenommen. Falls erforderlich, können zur Verbesserung der Genauigkeit, die Rechenvorgänge mehrfach wiederholt werden.

In einem weiteren, aufwendigeren Ausführungsbeispiel der Erfindung werden in voneinander unabhängigen Auswertezyklen Schätzwerte für die zu erwartende Vorverlagerung des Insassen und für seine zu erwartende Relativgeschwindigkeit gleichzeitig ermittelt.

Gemäß einer vorteilhaften weiteren Ausgestaltung der Erfindung wird das Ausgangssignal a(t) des Sensors 10 wiederholt einer Filterung unterzogen, also mindestens zweimal gefiltert. Die vermittels einfacher und wiederholter Filterung gewonnen Ausgangssignale a'(t) und a_{w(t)} Signale werden dann miteinander verglichen und akkumuliert. Das Vergleichsergebnis wiederum kann mit einem vorgebbaren Schwellwert in Beziehung gesetzt werden. Liegt das Vergleichsergebnis oberhalb des vorgebbaren Schwellwerts, dann kann auf eine unfallbedingte Strukturveränderung des Kraftfahrzeugs geschlossen werden, die beispielsweise nachteilige Folgen für die lange der zur Verfügung stehenden Knautschzone hat. Beispielsweise kann ein Karosseriebauteil im Bereich der Knautschzone infolge einer zu hohen Belastung brechen, so daß kein Energieabbau durch Verformungsarbeit mehr möglich ist. Falls ein derartiges Ereignis eintritt, kann aus dem Vergleich zwischen dem durch ersten Filterung gewonnen Funktionswert mit dem durch mehrfache Filterung gewonnen Funktionswert ein Vergleichskriterium für die Verschärfung des Vorverlagerungsgrenzwertes s_{g} bzw. des Relativgeschwindigkeitsgrenzwertes v_{g} gewonnen werden.

Die durch Filterung geglättete aus dem Ausgangssignal a(t) des Sensors 10 gewonnene Beschleunigungszeitkurve a'(t) ist eine im wesentlichen sinusähnliche Funktion, da sie wie die Sinuskurve im ersten Quadranten unipolar ist und stetig ansteigt. Um eine Vorausschätzung des künftigen Beschleunigungsverlaufs und, davon abgeleitet, der künftigen Vorverlagerung des Fahrzeuginsassen oder seiner künftigen Relativgeschwindigkeit in Bezug auf die Fahrgastzelle vornehmen zu können, wird die Funktion zweckmäßig mit einer leicht berechenbaren Näherungsfunktion, beispielsweise einer Sinuskurve selbst oder aber einer Polynomdarstellung, zweckmäßig zweiten oder dritten Grades, angenähert. Die derart ermittelten Funktionswerte lassen sich in der Praxis vorteilhaft in einem Speicherelement des Mikrorechners 23 der elektronischen Einrichtung 20 abspeichern. Bei einem tatsächlichen Unfallgeschehen kann die elektronische Einrichtung 20 dann außerordentlich schnell auf die abgespeicherten Tabellenwerte zurückgreifen und bei der durchzuführenden Vorausschätzung feststellen, ob zeitlich in der Zukunft liegende Funktionswerte der Funktion oder die davon ableitbaren Größen Vorverlagerung des Fahrzeuginsassen und/oder seine Relativgeschwindigkeit die schon erwähnten, vorgebbaren Grenzwerte überschreiten oder nicht. Falls eine Überschreitung zu befürchten ist, kann eine Aktivierung des Sicherungsmittels rechtzeitig in Angriff genommen werden, so daß ein sicherer Schutz der Fahrzeuginsassen ermöglicht wird.

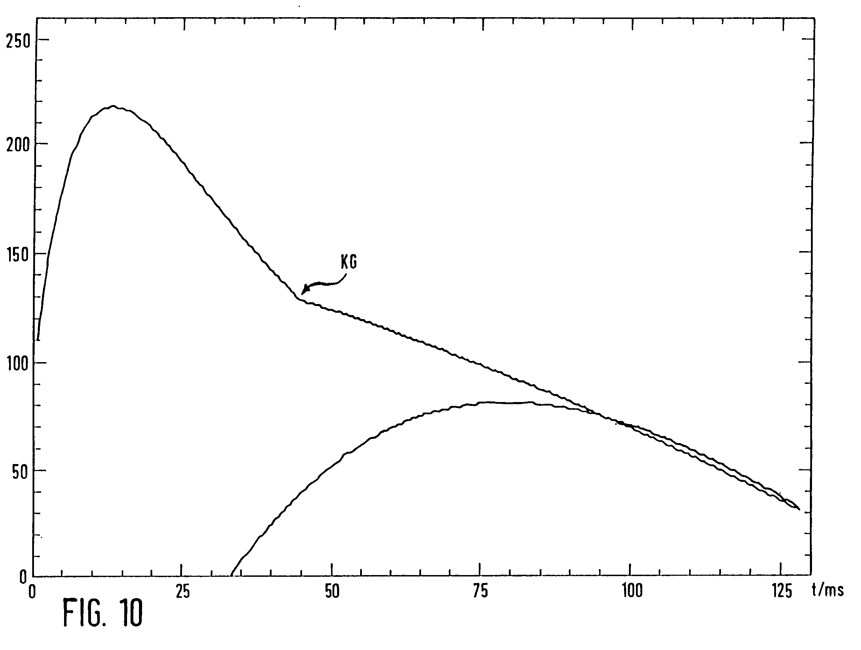

Die Erfindung wird im folgenden unter Bezug auf Figur 10, 11 und Figur 12 anhand eines tatsächlich abgelaufenen Crashvorgangs erläutert. Dabei zeigt das in Figur 10 dargestellte Diagramm in seinem oberen Teil eine von vorgebbaren Grenzwerten gebildete Grenzkurve. Die Grenzwerte sind in diesem Fall zeitabhängig. Die Abszisse entspricht der Zeitachse, auf der die Zeit in Millisekunden eingetragen ist. Auf der Ordinate sind Inkremente des entsprechenden Grenzwertes aufgetragen. Aus der Grenzkurve geht hervor, daß in der Anfangsphase des Crashverlaufs, dessen Beginn zum Zeitpunkt t = 0 angenommen wird, vergleichsweise große Werte des Grenzwertes vorgegeben sind. So liegt das Maximum der Grenzkurve KG in dem Zeitintervall zwischen 10 und etwa 15 Millisekunden nach Beginn des Crashvorgangs, um danach im wesentlichen stetig abzufallen. Das heißt, mit zunehmender Zeitdauer des Crashvorgangs wird die Grenzbedingung ständig verschärft, da die Grenzwerte kontinuierlich verringert werden. Falls die durch Vorausschätzung ermittelten Werte diese Grenzkurve überschreiten, wird das Schutzmittel aktiviert, wie im folgenden noch gezeigt wird.

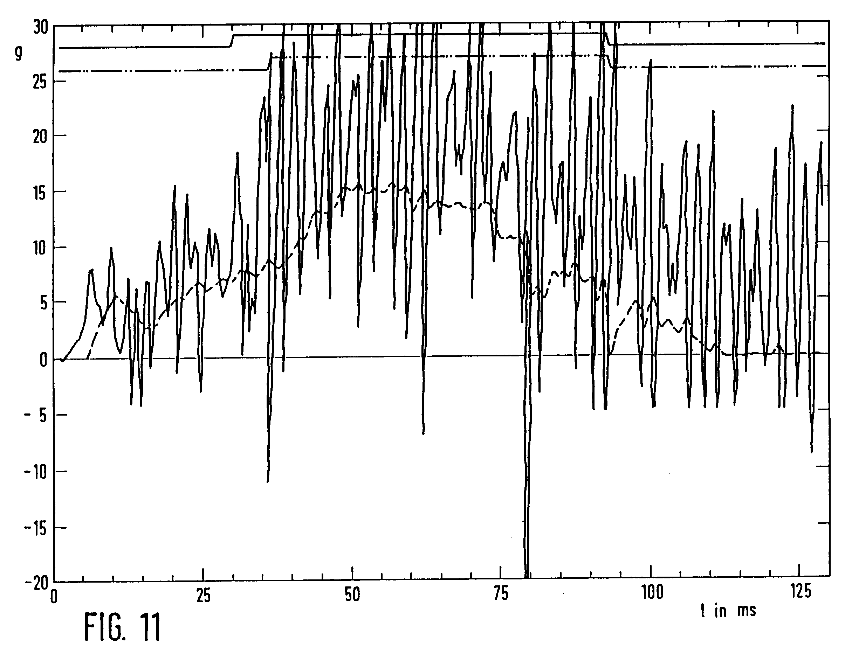

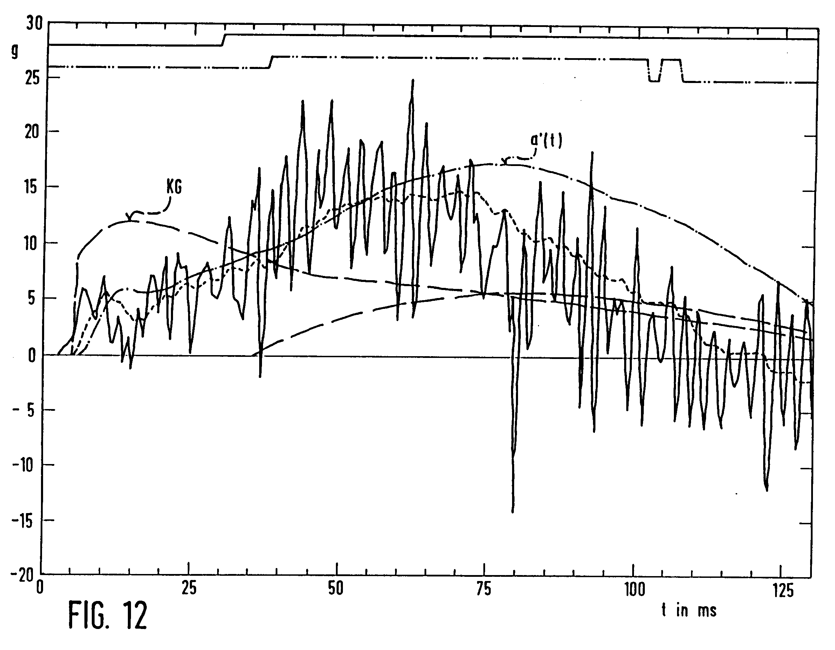

Figur 11 zeigt das Ausgangssignal a(t) des Sensors 10, das dieser bei einem Crashvorgang abgibt. Auf der Abszisse ist wiederum die Zeit t in Millisekunden aufgetragen, während die Ordinate positive und negative Beschleunigungswerte in Einheiten der Erdbeschleunigung g angibt. Schließlich zeigt Figur 12, in einem Diagramm vereint, das von einem Crashvorgang herrührende Ausgangssignal a(t) des Sensors 10 zusammen mit der aus Grenzwerten bestehenden Grenzkurve KG und der durch Filterung und ggf. Approximation gewonnenen, ggf. vorausgeschätzten Funktion der Beschleunigungszeitkurve a'(t). Eine Vorausschätzung aufgrund der in der Anfangsphase des Crashvorgangs gemessenen Beschleunigungswerte und unter Zuhilfenahme der daraus durch Filterung gewonnen geglätteten Beschleunigungskurve führt zu dem Ergebnis, daß die Kurve a'(t) die Grenzkurve KG nach einer Zeit von etwa 35 Millisekunden nach Beginn des Crashvorgangs schneiden wurde. Die Vorverlagerung des Fahrzeuginsassen würde dabei etwa 15 cm betragen. Aus dieser Vorhersage wurde eine Aktivierung des Schutzmittels in dem Zeitintervall von 33,1 bis 36,0 Millisekunden nach Crashbeginn festgelegt.

## Patentansprüche

1. Verfahren zum Schutz von Fahrzeuginsassen, bei dem ein für die Fahrzeuginsassen vorgesehenes Schutzmittel (30), wie zum Beispiel Airbag und/oder Gurtstraffer, in Abhängigkeit von dem Ausgangssignal mindestens eines die Fahrzeugbeschleunigung (a) erfassenden Beschleunigungssensors (10) aktiviert wird, bei dem nach dem Beginn eines Unfallablaufs die von der Beschleunigungseinwirkung hervorgerufene zukünftige Verlagerung (s) des Fahrzeuginsassen und/oder seine zukünftige Relativgeschwindigkeit (v) in bezug auf die Fahrgastzelle abgeschätzt werden und eine Aktivierung des Schutzmittels (30) dann erfolgt, wenn die Abschätzung ergibt, daß die Schätzwerte innerhalb eines vorgebbaren zukünftigen Zeitintervalls vorgebbare Grenzwerte (sg, vg) überschreiten, wobei zur Gewinnung eines Schätzwertes (a'(t)) das Ausgangssignal (a(t)) des Sensors (10) einer Kalman-Filterung unterzogen wird.

2. Verfahren nach Anspruch 1, dadurch gekennzeichnet, daß als vorgebbares zukünftiges Zeitintervall die jeweils bekannte Aktivierungszeit des jeweiligen Schutzmittels (30), wie beispielsweise Airbag und/oder Gurtstraffer verwendet wird.

3. Verfahren nach einem der Ansprüche 1 und 2, dadurch gekennzeichnet, daß als vorgebbares zukünftiges Zeitintervall ein Zeitintervall zwischen 5 und 50 Millisekunden, insbesondere zwischen 25 und 35 Millisekunden, nach Beginn des Crashvorgangs eingesetzt werden.

4. Verfahren nach einem der Absprüche 1 bis 3, dadurch gekennzeichnet, daß bei der Vorgabe der Grenzwerte für die Verlagerung des Fahrzeuginsassen (s_{g}) und die Relativgeschwindigkeit des Fahrzeuginsassen (v_{g}) die Geometrie und/oder die Struktur der Fahrgastzelle und/oder des Schutzmittels (30) berücksichtigt werden.

5. Verfahren nach Anspruch 4, dadurch gekennzeichnet, daß als Grenzwert (s_{g}) für die Vorverlagerung (s1) des Fahrzeuginsassen ein Weg von 5 bis 30 cm, insbesondere 10 bis 20 cm, angenommen wird.

6. Verfahren nach Anspruch 4, dadurch gekennzeichnet, daß als Grenzwert (v_{g}) für die Relativgeschwindigkeit des Fahrzeuginsassen in bezug auf die Fahrgastzelle ein Wert von 5 bis 30 km/h, insbesondere 10 bis 25 km/h, angenommen wird.

7. Verfahren nach einem der Absprüche 1 bis 6, dadurch gekennzeichnet, daß das Ausgangssignal (a(t)) des Sensors (10) mindestens zwei Filterungen unterzogen wird, daß die gefilterten Signale (a, aw) verglichen werden, daß die Vergleichswerte akkumuliert werden und mit einem vorgebbaren Grenzwert (sg, Vg) in Beziehung gesetzt werden und daß aus diesem Vergleich ein auf unfallbedingte Strukturveränderungen des Fahrzeugs hinweisendes Korrekturkriterium für die Aktivierungsphase des Schutzmittels (30) abgeleitet wird.

8. Verfahren nach einem der Ansprüche 1 bis 7, dadurch gekennzeichnet, daß die vorgebbaren Grenzwerte (sg, Vg) Funktionen mindestens eines Betriebsparameters sind.

9. Verfahren nach Anspruch 8, dadurch gekennzeichnet, daß die vorgebbaren Grenzwerte (sg, Vg) eine Funktion der Zeit, insbesondere der Crashdauer sind.

10. Verfahren nach einem der Ansprüche 1 bis 9, dadurch gekennzeichnet, daß die vorgebbaren Grenzwerte (sg, Vg) nach einer vorgebbaren Zeitdauer mit zunehmender Crashdauer verschärft werden.

11. Verfahren nach einem der Ansprüche 1 bis 10, dadurch gekennzeichnet, daß die aus dem Ausgangssignal (a(t)) des Sensors (10) durch Filterung abgeleitete Funktion (a'(t)) durch eine leicht berechenbare Funktion Vorzugsweise eine trigonometrische Funktion oder ein Polynom niedrigen Grades angenähert wird.

12. Verfahren nach einem der Ansprüche 1 bis 11, dadurch gekennzeichnet, daß die näherungsweise berechneten Funktionswerte in einem Speicherelement abgespeichert werden, aus dem sie während eines Crashvorgangs auslesbar sind.

13. Verfahren nach einem der Ansprüche 1 bis 12, dadurch gekennzeichnet, daß die vorgebbaren Grenzwerte (sg, Vg) eine Grenzkurve (KG)bilden, die durch eine Faltung einer Gaußfunktion mit der durch mindestens eine Filterung aus dem Ausgangssignal a(t) des Beschleunigungssensor (10) gewonnenen Funktion gebildet wird.

14. Einrichtung zum Schutz von Fahrzeuginsassen mit mindestens einem Beschleunigungssensor (10) und mit mindestens einem Schutzmittel (30) für Fahrzeuginsassen, wie zum Beispiel Airbag und/oder Gurtstraffer, mit einer elektronischen Einrichtung (20) zur Auswertung des Ausgangssignals des Beschleunigungssensors (10) und Ansteuerung der Schutzmittel (30) nach Maßgabe des bewerteten Ausgangssignals, sowie mit Mitteln zur Bewertung der Insassenposition, mit Mitteln zur Vorgabe von Grenzwerten bezüglich der Verlagerung des Fahrzeuginsassen und/oder seiner Relativgeschwindigkeit in bezug auf die Fahrgastzelle (24, 25, 26, 27), mit Filtermitteln (21) für das Ausgangssignal (a(t)) des Sensors (10) und mit Schätzmitteln zur Vorausschätzung, ob innerhalb eines vorgebbaren Zeitintervalls zu erwartende Werte der Verlagerung (s) und/oder der Relativgeschwindigkeit (v) des Fahrzeuginsassen die vorgebbaren Grenzwerte überschreiten, wobei die Filtermittel (21) eine Kalman-Filterung des Ausgangssignals (a(t)) des Sensors (10) bewirken.

## Claims

1. Procedure for protecting vehicle occupants, in which procedure a protection means (30) provided for the vehicle occupants, such as, for example, airbag and/or seat belt pretensioning means, is activated as a function of the output signal of at least one acceleration sensor (10) which detects the vehicle acceleration (a), in which procedure the future displacement (s), brought about by the effect of acceleration after the start of an accident sequence, of the vehicle occupant and/or his future relative speed (v) in relation to the passenger compartment are estimated and the protection means (30) is activated if the result of the estimation is that the estimated values exceed limit values (sg, vg) which can be prescribed within a prescribable future time interval, the output signal (a(t)) of the sensor (10) being subjected to a Kalman filtering operation in order to acquire an estimated value (a'(t)).

2. Procedure according to Claim 1, characterized in that the respectively known activation time of the respective protection means (30), such as, for example, airbag and/or seat belt pretensioning means, is used as prescribable future time interval.

3. Procedure according to one of Claims 1 and 2, characterized in that a time interval between 5 and 50 milliseconds, in particular between 25 and 35 milliseconds, after the start of the crash procedure is used as prescribable future time interval.

4. Procedure according to one of Claims 1 to 3, characterized in that during the prescribing of the limit values for the displacement of the vehicle occupant (s_{g}) and for the relative speed of the vehicle occupant (v_{g}), the geometry and/or the structure of the passenger compartment and/or of the protection means (30) are taken into account.

5. Procedure according to Claim 4, characterized in that a distance of 5 to 30 cm, in particular 10 to 20 cm, is assumed as limit value (s_{g}) for the initial displacement (s1) of the vehicle occupant.

6. Procedure according to Claim 4, characterized in that a value of 5 to 30 km/h, in particular 10 to 25 km/h, is assumed as a limit value (v_{g}) for the relative speed of the vehicle occupant in relation to the passenger compartment.

7. Procedure according to one of Claims 1 to 6, characterized in that the output signal (a(t)) of the sensor (10) is subjected to at least two filtering operations, in that the filtered signals (a, aw) are compared, in that the comparison values are accumulated and are related to a prescribable limit value (sg, Vg), and in that a correction criterion, indicating structural changes of the vehicle owing to an accident, for the activation phase of the protection means (30) is derived from this comparison.

8. Procedure according to one of Claims 1 to 7, characterized in that the prescribable limit values (sg, Vg) are functions of at least one operating parameter.

9. Procedure according to Claim 8, characterized in that the prescribable limit values (sg, Vg) are a function of time, in particular of the duration of the crash.

10. Procedure according to one of Claims 1 to 9, characterized in that the prescribable limit values (sg, Vg,) are made stricter after a prescribable length of time as the duration of the crash increases.

11. Procedure according to one of Claims 1 to 10, characterized in that the function (a'(t)) which is derived from the output signal (a(t)) of the sensor (10) by filtering is approximated by means of an easily calculable function, preferably a trigonometric function or a low-order polynomial.

12. Procedure according to one of Claims 1 to 11, characterized in that the approximately calculated function values are stored in a memory element from which they can be read out during a crash procedure.

13. Procedure according to one of Claims 1 to 12, characterized in that the prescribable limit values (sg, Vg) form a limit curve (KG) which is formed by folding a Gaussian function with the function acquired, by means of at least one filtering operation, from the output signal a(t) of the acceleration sensor (10).

14. Device for protecting vehicle occupants with at least one acceleration sensor (10) and with at least one protection means (30) for vehicle occupants, such as, for example, airbag and/or seat belt pretensioning means, with an electronic device (20) for evaluating the output signal of the acceleration sensor (10) and actuating the protection means (30) in accordance with the evaluated output signal, and with means for evaluating the position of the occupants, with means for prescribing limit values with respect to the displacement of the vehicle occupant and/or his relative speed in relation to the passenger compartment (24, 25, 26, 27), with filter means (21) for the output signal (a(t)) of the sensor (10) and with estimation means for estimating in advance whether values of the displacement (s) and/or of the relative speed (v) of the vehicle occupant which are to be expected within a prescribable time interval exceed the prescribable limit values, the filter means (21) bringing about a Kalman filtering operation performed on the output signal (a(t)) of the sensor (10).

## Revendications

1. Procédé pour protéger les occupants d'un véhicule, selon lequel un moyen de protection (30) des occupants du véhicule tel que par exemple une poche gonflable (airbag) et/ou un prétentionneur de ceinture, est activé en fonction du signal de sortie d'au moins un capteur d'accélération (10) détectant l'accélération du véhicule (a), et après le début du déroulement d'un accident, le déplacement futur (s) des occupants du véhicule, provoqué par l'effet de l'accélération et/ou leur vitesse relative future (v) sont évalués en fonction de la position des occupants du véhicule et le moyen de protection (30) est activé lorsque l'évaluation montre que les valeurs évaluées dépassent les valeurs limites (sg, vg) prédéterminées dans un intervalle de temps futur prédéterminé, et pour obtenir une valeur évaluée (a'(t)) on soumet le signal de sortie (a(t)) du capteur (10) à un filtrage de Kalman.

2. Procédé selon la revendication 1,
caractérisé en ce que
l'intervalle de temps futur prédéterminé est chaque fois la durée d'activation connue du moyen de protection respectif (30) tel que la poche gonflable et/ou le prétentionneur de ceinture.

3. Procédé selon l'une des revendications 1 et 2,
caractérisé en ce que
l'intervalle de temps futur prédéterminé est un intervalle de temps compris entre 5 et 50 millisecondes, notamment entre 25 et 35 millisecondes après le début du déroulement de l'accident.

4. Procédé selon l'une des revendications 1 à 3,
caractérisé en ce que
pour prédéterminer la valeur limite pour le déplacement des occupants du véhicule (sg) et la vitesse relative des occupants du véhicule (vg), on tient compte de la géométrie et/ou de la structure de l'emplacement du passager et/ou du moyen de protection (30).

5. Procédé selon la revendication 4,
caractérisé en ce que
comme valeur limite (sg) pour le déplacement préalable (s1) des occupants du véhicule on prend une course de 5 à 30 cm, notamment de 10 à 20 cm.

6. Procédé selon la revendication 4,
caractérisé en ce que
comme valeur limite (vg) pour la vitesse relative des occupants du véhicule par rapport à leur emplacement dans le véhicule, on prend une valeur comprise entre 5 et 30 km/h, notamment de 10 à 25 km/h.

7. Procédé selon l'une des revendications 1 à 6,
caractérisé en ce que
le signal de sortie (a(t)) du capteur (10) est soumis à au moins deux filtrages, les signaux filtrés (a, aw) sont comparés et les valeurs de comparaison accumulées et mises en relation avec une valeur limite prédéterminée (sg, vg), et, à partir de cette comparaison, on déduit un critère de correction pour la phase d'activation du moyen de protection (30) lié à la variation de structure du véhicule sous l'effet de l'accident.

8. Procédé selon l'une des revendications 1 à 7,
caractérisé en ce que
les valeurs limites prédéterminées (sg, vg) sont les fonctions d'au moins un paramètre de fonctionnement.

9. Procédé selon la revendication 8,
caractérisé en ce que
les valeurs limites prédéterminées (sg, vg) sont une fonction du temps, notamment de la durée de l'accident.

10. Procédé selon l'une des revendications 1 à 9,
caractérisé en ce que
les valeurs prédéterminées (sg, vg) sont renforcées après une durée prédéterminée, en fonction croissante de la durée de l'accident.

11. Procédé selon l'une des revendications 1 à 10,
caractérisé en ce que
la fonction (a'(t)) déduite par filtrage du signal de sortie (a(t)) du capteur (10) est obtenue par approximation par une fonction facilement calculable, de préférence une fonction trigonométrique ou un polynôme de degré réduit.

12. Procédé selon l'une des revendications 1 à 11,
caractérisé en ce que
les valeurs de fonctions calculées par approximation sont enregistrées dans un élément de mémoire d'où elles peuvent être lues pendant le déroulement d'un accident.

13. Procédé selon l'une des revendications 1 à 12,
caractérisé en ce que
les valeurs limites prédéterminées (sg, vg) forment une courbe limite (KG) obtenue comme intégrale de convolution d'une fonction de Gauss par la fonction obtenue par au moins un filtrage du signal de sortie (a(t)) du capteur d'accélération (10).

14. Installation pour la protection des occupants d'un véhicule, comprenant au moins un capteur d'accélération (10) et au moins un moyen de protection (30) pour les occupants du véhicule, comme par exemple une poche gonflable et/ou un prétentionneur de courroie, une installation électronique (20) pour exploiter le signal de sortie du capteur d'accélération (10) et commander le moyen de protection (30) suivant la mesure du signal de sortie, exploité, ainsi que des moyens pour exploiter la position des occupants, des moyens pour prédéterminer les valeurs limites concernant le déplacement des occupants du véhicule et/ou la vitesse relative en rapport avec la position de l'occupant (24, 25, 26, 27), des moyens de filtrage (21) pour le signal de sorte (a(t)) du capteur (10) et des moyens d'évaluation pour évaluer préalablement si à l'intérieur d'un intervalle de temps prédéterminé, les valeurs prévisibles du déplacement (s) et/ou de la vitesse relative (v) des occupants du véhicule, dépassent les valeurs limites prédéterminées, les moyens de filtrage (21) assurant un filtrage Kalman du signal de sortie (a(t)) du capteur (10).
